Europäisches Patentamt

European Patent Office

Office européen des brevets

(19)

(11) Publication number: **0 087 824**
**B1**

(12) **EUROPEAN PATENT SPECIFICATION**

(45) Date of publication of patent specification: **19.02.86**

(21) Application number: **83102570.5**

(22) Date of filing: **19.12.80**

(60) Publication number of the earlier application in accordance with Art. 76 EPC: **0 032 038**

(51) Int. Cl.⁴: **F 16 K 5/02**, F 16 K 43/00, F 16 K 27/00

(54) **Plug valve.**

(30) Priority: **08.01.80 GB 8000539**
**25.09.80 GB 8030894**

(43) Date of publication of application:
**07.09.83 Bulletin 83/36**

(45) Publication of the grant of the patent:
**19.02.86 Bulletin 86/08**

(84) Designated Contracting States:
**AT BE CH DE FR GB IT LI LU NL SE**

(56) References cited:
**EP-A-0 032 037**
**EP-A-0 032 038**
**AT-B- 259 320**
**DE-B-2 308 293**
**GB-A-1 546 994**
**US-A-3 011 513**
**US-A-3 552 716**
**US-A-3 809 114**
**US-A-3 913 612**
**US-A-4 058 289**

(73) Proprietor: **XOMOX CORPORATION**
**4444 Cooper Road**
**Cincinnati Ohio 45242 (US)**

(72) Inventor: **Sandling, Michael John**
**Beggars Roost**
**Prixford Nr. Barnstaple Devon (GB)**

(74) Representative: **Williams, Trevor John et al**
**J.A. KEMP & CO. 14 South Square Gray's Inn**
**London WC1R 5EU (GB)**

Courier Press, Leamington Spa, England.

## Description

This invention relates to a plug valve having a plug rotatable within a chamber in the valve housing, a liner comprising resilient plastics material being provided between the plug and the internal wall of the chamber for sealing purposes.

In such valves the plastics material acts as a sleeve to provide a seal between the metal body of the valve and the metal plug which operates the opening and closing function. Various valves of this type are disclosed in prior British Patent Specifications GB—A—876,253; 876,254; 917,621, 971,646; 1,115,426; 1,235,644; 1,255,315; 1,275,203; 1,279,591 and 1,338,928. In various of these prior constructions the interior chamber of the valve housing is carefully profiled so as to provide recesses to retain a sealing liner of plastics materials in the required position to seal against the plug while at the same time providing clearances to allow for thermal expansion of the plastics material without binding of the valve, careful co-ordination of the dimensions and location of the liner relative to the edge of the material of the chamber within the housing around the inlet and outlet ports being required whereby any tendency to lift the corner of the liner when the valve is only very slightly open by the rush of fluid past the edge of the liner is minimised.

The present invention is directed at providing the benefits of the prior constructions which have been used for a number of years with a design which is cheaper and simpler to fabricate than the prior construction and in which the sealing sleeve itself can be replaced with the minimum of difficulty and down-time of the valve. This is of particular importance where the valve may be welded into a line at a location to which access is difficult.

In our earlier British Patent Specification GB—A—1546996 we disclose a rotary plug valve comprising a housing which has inlet and outlet ports and a frusto-conical chamber into which said ports open, a frusto-conical liner which is non-rotatably disposed within the chamber and which comprises a rigid metal liner body-supporting plastics sealing means, preferably a fluorocarbon material, on its radially inner and outer surfaces, the sealing material on the radially inner surface being comprised by a frusto-conical sleeve of plastics material, the liner being provided with apertures aligned with said ports, a frusto-conical plug having a flow passage therethrough, said plug being received within said liner and being rotatable from exteriorly of the housing between valve-open and valve-closed positions; said liner and said plug being readily removable as a unit from the housing.

This prior construction uses a harness of O-ring seals between the exterior surface of the metal body and the interior surface of the housing chamber. While successful in many applications the metal body needs to be carefully fitted and matched to the interior surface of the housing chamber and also difficulties arise when corrosive or radioactive fluids are passed through the valve.

These problems have been overcome using a sealing sleeve instead of the O-ring harness when not only are corrosion difficulties overcome but also a very efficient sealing action is obtained even when the inner surface of the housing chamber is blemished or not a perfect match to the outer surface of the liner. Thus the present invention is characterised in that the sealing material on the outer surface of the metal body of said liner is also comprised by a sleeve of plastics material, in that ledges are provided at the smaller diameter end of the liner body to retain said sleeves on said body and in that retaining annular lips are provided around the apertures aligned with the ports to hold the material of the sleeves away from said apertures.

Preferably the plastics material extends radially inwardly and outwardly beyond the lips and ledges whereby the chamber inner wall and plug are contacted solely by plastics material. Preferably also substantial proportions of the inner surface and/or outer surface of the liner and/or outer surface of the liner is spaced from the plug and chamber surfaces respectively to provide relief areas to permit thermal expansion of the plastics material of the sleeves in use of the valve.

The invention will be further described, by way of example, with reference to the accompanying drawings in which:—

Figure 1 is a longitudinal sectional view of part of a rotary plug valve embodying the present invention; .

Figure 2 is a sectional view of the valve body of Figure 1 and taken along line 18—18 of Figure 1;

Figure 3 is a sectional view of the valve body of Figure 1 and taken along line 19—19 of Figure 1; and

Figure 4 is a sectional view of part of a further embodiment of valve assembly embodying the invention.

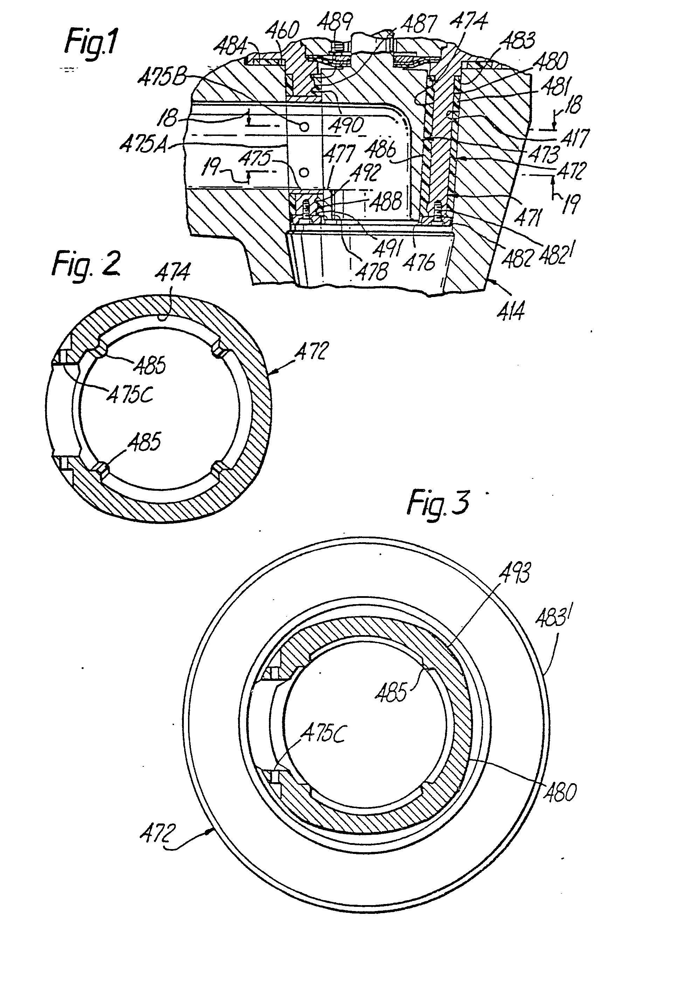

Referring to Figure 1, there is shown part of a valve assembly having a valve unit 471 which includes a valve liner comprising a metal liner body 472 (further indicated in this description as "valve body" 472) and sealing sleeves 481 and 486 and a rotatable valve member 473 within the valve liner. The valve body 472 is tapered to fit within the tapered bore 417 in the housing 414. The rotatable valve member 473 also is tapered to fit within a tapered bore, which is defined by side wall 474, in the valve body 472.

The valve body 472 has an inlet port 475 communicating with the inlet port in the housing. The inlet port 475 extends through the side wall 474 of the valve body 472 and is defined by a lip 475A secured to the valve body 472 by pins 475B driven in holes 475C (see Figures 2 and 3) in the side wall 474 of the valve body 472. The valve body 472 has an outlet port 476 (see Figure 1), which is circular, in its bottom and communicating with the outlet port in the housing.

The rotatable valve member 473 has an inlet port 477, which is the same shape as the inlet port 475 in the valve body 472, in its tapered side wall communicating with the inlet port 475 in the valve body 472 when the rotatable valve member 473 is in its open position. The rotatable valve member 473 has an outlet port 478, which is the same shape as the outlet port 476 in the valve body 472, in its bottom end communicating with the outlet port 476 in the valve body 472 at all times.

The tapered valve body 472 has a longitudinal cut-away portion 480 extending for a substantial length around its entire circumference except for the location of the inlet port 475 to receive the sealing sleeve 481, which is retained within the portion 480. The valve body 472 includes a removable bottom end 482, which is secured by screws 482' to the valve body 472, to enable sliding of the sealing sleeve 481 over the outer surface of the valve body 472 until it engages an annular shoulder 483 and on which the sealing sleeve 481 is shrunk to have a tight fit.

The valve body 472 has an outwardly extending flange 483' at its upper end to overlie the annular surface 460 in the housing 414. An annular sealing element 484, which is supported on the flange 483', engages the surface 460 to form a seal therebetween.

The tapered inner side wall 474 of the valve body 472 has a plurality of longitudinal ribs 485 (see Figures 2 and 3) extending inwardly therefrom and angularly spaced from each other. The ribs 485 are spaced from each other so that the inlet port 477 (see Figure 1) in the rotatable valve member 473 will be disposed between two of the ribs 485 (see Figures 2 and 3) when the rotatable valve member 473 is in its closed position as well as when the rotatable valve member 473 is in its open position.

The sealing sleeve 486 (see Figure 1) is mounted within the inner side wall 474 of the valve body 472 to form a seal with the rotatable valve member 473. The sealing sleeve 481 and the sealing sleeve 486 are formed of any suitable plastics material. This is preferably a fluorocarbon material, a suitable example being polytetrafluoroethylene.

It should be understood that both the sealing sleeve 481 and the sealing sleeve 486 are held in position through the removable bottom end 482 and the lip 475A. Neither the removable bottom end 482 nor the lip 475A is disposed in position until both of the sealing sleeve 481 and the sealing sleeve 486 are at their desired positions.

The valve body 472 has an upper continuous rib 487, which is disposed above the inlet port 477. The valve body 472 has a lower continuous rib 488, which is disposed beneath the inlet port 477 and above the outlet port 476.

A pair of relief grooves 489 and 490 is disposed on opposite sides of the rib 487. Thus, the rib 487 functions as a pressure sealing area for the sealing sleeve 486 with the grooves 489 and 490 functioning as pressure relief areas for the sealing sleeve 486.

The rib 488 has an annular relief groove 491 beneath it and a relief groove 492 above it adjacent the outlet port 475 with the groove 492 continuing to the groove 490 in the areas of the inner side wall 474 in which the outlet port 475 is not. Thus, the grooves 491 and 492 provide pressure relief areas for the sealing sleeve 486 with the rib 488 functioning as a pressure sealing area for the sealing sleeve 486.

The longitudinal ribs 485 (see Figures 2 and 3) provide pressure sealing areas for the sealing sleeve 486 in its engagement with the outer surface of the rotatable valve member 473. The areas between the ribs 485 provide pressure relief areas for the sealing sleeve 486.

As previously mentioned, the circumference of the tapered valve body 472 has the cut-away portion 480 within which the sealing sleeve 481 is disposed. As shown in Figure 3, the valve body 472 has four areas of the portion 480 enlarged to function as ribs 493. These cooperate with the sealing sleeve 481 to form pressure sealing areas with the spaces therebetween functioning as pressure relief areas. Thus, the ribs 493 function to ensure that the sealing sleeve 481 has sufficient relief areas as well as pressure sealing areas with the housing.

While the structure by which the valve unit 471 is received in the housing has not been illustrated in detail in Figure 1 the material described in various embodiments of the valve disclosed in the earlier application EP—A—32.038 may be used. It is merely necessary that the respective inner and outer sleeves be compressed by the axial forcing of the valve body into the frusto conical housing chamber and the valve plug into the frusto conical interior bore of the body.

While the housing has been shown and described as having only the single inlet port, it should be understood that the housing could have a plurality of inlet ports. These inlet ports would have to be disposed so that each of the inlet ports would be disposed between two of the longitudinal ribs, for example. The number of the inlet ports might require an increase in the number of the longitudinal ribs and a decrease in the spacing therebetween by reducing the size of the inlet ports.

While the outlet port in the housing is shown disposed perpendicular to the inlet port, it should be understood that the outlet port could be axially aligned with the inlet port. This would require the rotatable valve member of the valve unit, for example, to have the passage extend straight through.

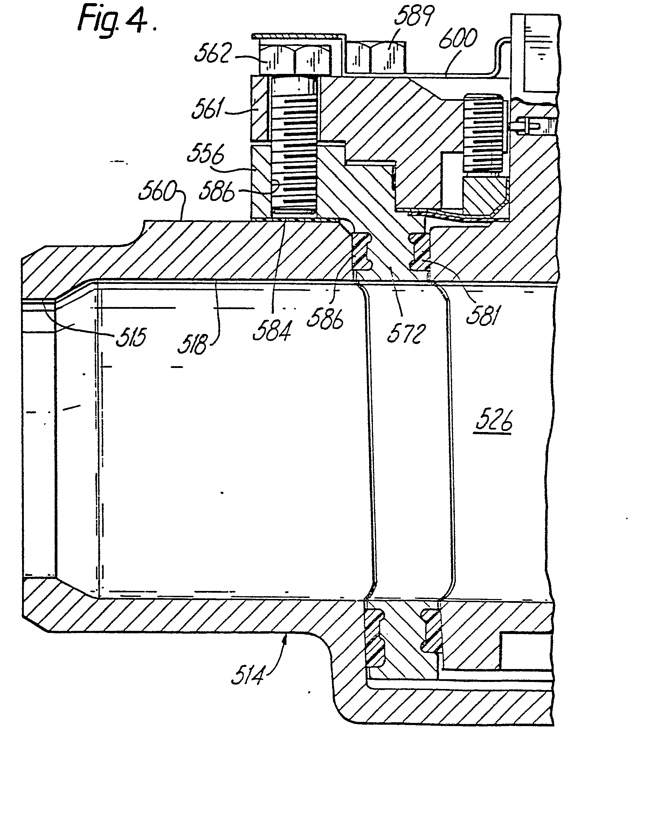

Figure 4 illustrates an embodiment similar to that of Figure 1 but the housing 514 of which has an outlet passage, not shown, aligned axially with the inlet passage 518, and is provided with an inlet port 515. Instead of having the removable retaining bottom end 482 and lip 475 of Figure 1, the sealing sleeves 586 and 581 are held in position by integrally formed lips of the valve body 572.

The valve cover 561 is secured to the flange 556 of the valve body 572 by means of bolts 562 whereas the valve body itself, which is provided with a through passage 526, is secured to the valve housing 514 by bolts 589. The bolts 562 which secure the valve cover 561 to the flange 556 are received within threaded bores 586 which can serve a jacking function as will be explained. In the illustrated construction a sheet metal cover 600 is shown attached to the top of the cover 561 with portions covering the heads of the bolts 562 so that normally the bolts 562 are inaccessible to prevent separation of the cover 561 and body 572 whereby the valve unit can be handled as a whole for fitting into and removal from the housing 514.

When it is required to remove the unit from the housing 514, by removing sheet metal cover 600 and then two of the bolts 562, longer threaded members or jacking bolts can be fitted into the bores 586 thus exposed to be forced against the top of the housing 514 to break the wedge fit of the body 572 in the tapered bore in the housing. 514. Once that wedge fit has been broken the unit can easily be removed as a single unit. Naturally the replacement valve unit will come with all the bolts 562 properly in place so as simply to be fitted merely by tightening the bolts 586. Appropriate means will be provided to ensure alignment of the ports in the valve body 572 with the fluid flow apertures 518 in the valve housing.

In general while valves have been disclosed herein having only a single inlet and a single outlet port it will be appreciated that the construction can readily be adapted to multiple versions, for example 3-way, 4-way and 5-way directional valves and for control valves.

With the above-described constructions the metal body can be conveniently produced as a casting using the precision lost-wax process. The bore of the housing into which the sleeve is inserted is a simple machined taper. The finished assembly incorporates lips provided by the various flanges to prevent cold flow of the plastics material, high pressure areas where metal is sandwiched between the plastics material and also relief areas between the high pressure areas. As previously mentioned the main advantage achieved with this construction is that the liner may be replaced quickly and easily by releasing it, lifting it out of the housing and assembling the replacement liner into the valve. This is particularly advantageous for the valve which is welded into a pipeline and requires servicing under hazardous conditions. Previous designs which had a specially contoured body to facilitate the valve sleeve necessitate the use of complicated de-sleeving and re-sleeving methods.

A further advantage of the described constructions is in the area of fire safety. Should the valve be involved in a fire which causes the plastics material of the liner to disintegrate or decompose due to excessive heat, additional mechanical movement in a downward direction to the plug will force the body down until a metal to metal seat is obtained between the tapered wall providing the frusto-conical chamber in the housing and the outer port lip of the body, and also between the tapered plug and the inner port lip of the body.

## Claims

1. A rotary plug valve comprising a housing (414; 514) which has inlet and outlet ports (515) and a frusto-conical chamber into which said ports open, a frusto-conical liner which is non-rotatably disposed within the chamber and which comprises a rigid metal liner body (472; 572) supporting plastics sealing means (481, 486; 581, 586), preferably a fluorocarbon material, on its radially inner and outer surfaces, the sealing material on its radially inner surface being comprised by a frusto-conical sleeve (486; 586) of plastics material, the liner being provided with apertures aligned with said ports, a frusto-conical plug (473) having a flow passage (526) therethrough, said plug being received within said liner and being rotatable from exteriorly of the housing between valve-open and valve-closed positions; said liner and said plug being readily movable as a unit (471) from the housing (414; 514), characterised in that the sealing material on the outer surface of the metal body (472; 572) of said liner is also comprised by a sleeve (481; 581) of plastics material; in that ledges (476, 482) are provided at the smaller diameter end of the liner body to retain said sleeves on said body and in that retaining annular lips (475) are provided around the apertures aligned with the ports to hold the material of the sleeves away from said apertures.

2. A rotary plug valve according to claim 1, characterised in that the plastics material of the sleeves (481, 486; 581, 586) extends radially inwardly and outwardly beyond the lips and ledges (476, 482; 475) whereby the inner chamber wall and the plug are contacted solely by the plastics material of the liner sleeves.

3. A rotary plug valve according to either preceding claim, characterised in that a substantial proportion of the radially inner surface (474) of the body (472) is relieved to provide relief areas between the plug surface and the metal body to permit thermal expansion of the plastics material of the inner sleeve in use of the valve.

4. A rotary plug valve according to claim 1, 2 or 3, characterised in that part of the radially outer surface (480) of the metal body (472) is so shaped as to provide relief areas between the chamber surface and the metal body to permit thermal expansion of the plastics material of the outer sleeve in use of the valve.

5. A rotary plug valve according to any preceding claim, characterised in that the ledges (476, 482) are provided by an annular rim (482) detachably secured to the smaller diameter end of the metal body (472).

6. A rotary plug valve according to any preceding claim characterised in that means are provided holding the body (472) in the housing chamber with the outer sleeve compressed therebetween.

7. A rotary plug valve according to any preceding claim, characterised in that means (561, 562) are provided for holding the valve plug in the body with the outer sleeve (586) compressed therebetween.

8. A rotary plug valve according to any preceding claim, characterised in that said body (472) has means (485) disposed in said bore and overlaid by said inner sealing sleeve (486) to provide pressure sealing areas for said sealing sleeve to seal against said rotatable valve plug and pressure relief areas for said sealing sleeve therebetween; and said body has means (493) disposed on its outer side wall and overlaid by said outer sealing sleeve (486) to provide pressure sealing areas for said sealing sleeve to seal against said housing and pressure relief areas for said sealing sleeve therebetween.

9. A valve according to claim 8, characterised in that the means disposed in said bore of the body includes; a plurality of longitudinal ribs (485) extending along the inside of said bore of said valve body and overlaid by said inner sealing sleeve, said ribs being so arranged that at least one end of the passage is disposed between two of said ribs (485) when said rotatable valve plug is in its open or closed position.

10. A valve according to claim 8 or 9, characterised in that said means disposed on the outer side wall of said body includes a plurality of longitudinal ribs (493) extending along the outer side wall of said body and overlaid by said outer sealing sleeve.

**Patentansprüche**

1. Hahn mit einem Gehäuse (414; 514), das eine Einlaßund eine Auslaßöffnung (515) und eine kegelstumpfförmige Kammer aufweist, in welche die Ein- und Auslaßöffnung münden, mit einer kegelstumpfförmigen Innenbuchse, die in der Kammer verdrehfest angeordnet ist und die einen starren Innenbüchsenkörper (472; 572) aus Metall aufweist, der an seiner radial inneren und äußeren Oberfläche eine Dichtungseinrichtung (481, 486; 581, 586) aus Kunststoff, vorzugsweise aus Fluorkohlenstoff trägt, wobei das Dichtungsmaterial an der radialen Innenfläche durch eine kegelstumpfförmige Hülse (486; 586) aus Kunststoffmaterial gebildet ist und die Innenbüchse mit Durchlässen versehen ist, die mit der Ein- und Auslaßöffnung fluchten, mit einem kegelstumpfförmigen Absperrorgan (473), das einen Strömungsdurchlaß (526) aufweist, wobei das Absperrorgan in der Innenbüchse aufgenommen und von außerhalb des Gehäuses zwischen einer geöffneten und einer geschlossenen Stellung verdrehbar ist, und wobei die Innenbüchse und das Absperrorgan als eine Einheit (471) leicht vom Gehäuse (414; 514) entfernbar sind, dadurch gekennzeichnet, daß das Dichtungsmaterial an der Außenfläche des Metallkörpers (472; 572) der Innenbüchse ebenfalls durch eine Hülse (481; 581) aus Kunststoffmaterial gebildet ist, daß an dem Ende des Innenbüchsenkörpers mit dem kleineren Durchmesser zum Festhalten der Hülsen am Körper Anschläge (476, 482) vorgesehen sind, und daß um die mit der Ein- und Auslaßöffnung fluchtenden Durchlässe herum ringförmige Festhalte-Lippen (475) vorgesehen sind, um das Material der Hülsen von den Durchlässen fernzuhalten.

2. Hahn nach Anspruch 1, dadurch gekennzeichnet, daß das Kunststoffmaterial der Hülsen (481, 486; 581, 586) sich radial nach innen und außen über die Lippen und Anschläge (476, 482; 475) hinaus erstreckt wodurch die innere Kammerwand und das Absperrorgan nur durch das Kunststoffmaterial der Hülsen der Innenbüchse in Berührung sind.

3. Hahn nach einem der vorhergehenden Ansprüche, dadurch gekennzeichnet, daß ein wesentlicher Anteil der radialen Innenfläche (474) des Körpers (472) zur Bildung von Entlastungsflächen zwischen der Absperrorganfläche und dem Metallkörper hinterdreht ist, um bei Verwendung des Hahnes eine thermische Ausdehnung des Kunststoffmaterials der Innenhülse ze ermöglichen.

4. Hahn nach Anspruch 1, 2 oder 3, dadurch gekennzeichnet, daß ein Teil der radialen Außenfläche (480) des Metallkörpers (472) derart ausgebildet ist, daß zwischen der Kammerfläche und dem Metallkörper Entlastungsflächen gegeben sind, um bei Verwendung des Hahnes eine thermische Ausdehnung des Kunststoffmaterials zu ermöglichen.

5. Hahn nach einem der vorhergehenden Ansprüche, dadurch gekennzeichnet, daß die. Anschlage (476, 482) durch einen ringförmigen Rand (482) gebildet sind, der an dem Ende des Metallkörpers (472) mit dem kleineren Durchmesser annehmbar befestigt ist.

6. Hahn nach einem der vorhergehenden Ansprüche, dadurch gekennzeichnet, daß Einrichtungen vorgesehen sind, die den Körper (472) in der Gehäusekammer halten, wobei die Außenhülse dazwischen zusammengedrückt ist.

7. Hahn nach einem der vorhergehenden Ansprüche, dadurch gekennzeichnet, daß zum Halten des Absperrorganes des Hahns im Gehäuse Einrichtungen (561, 562) vorgesehen sind, wobei die Außenhülse (586) dazwischen zusammendrückbar ist.

8. Hahn nach einem der vorhergehenden Ansprüche, dadurch gekennzeichnet, daß der Körper (472) eine Einrichtung (485) aufweist, die in der Bohrung angeordnet ist und die durch die innere Dichtungshülse (486) bedeckt ist, um für die Dichtungshülse zum Abdichten gegen das drehbare Absperrorgan des Hahnes Druckdichtungsflächen und Druckentlastungsflächen für die Dichtungshülse dazwischen zu bilden, und daß der Körper eine Einrichtung (493) aufweist, die an seiner äußeren Seitenwand angeordnet ist und die durch die äußere Dichtungshülse (486) bedeckt ist, um für die Dichtungshülse zum Abdichten gegen das Gehäuse Druckdichtungsflächen und Druckentlastungsflächen für die Dichtungshülse dazwischen zu bilden.

9. Hahn nach Anspruch 8, dadurch gekennzeichnet, daß die in der Bohrung des Körpers (472) angeordnete Einrichtung eine Vielzahl länglicher Rippen (485) enthält, die sich entlang der Innenseite der Bohrung des Körpers des Hahnes erstrecken und die durch die innere Dichtungshülse bedeckt sind, wobei die Rippen derart angeordnet sind, daß mindestens ein Ende des Durchlasses zwischen zweien der Rippen (485) angeordnet ist, wenn das drehbare Absperrorgan des Hahnes sich in der geöffneten oder geschlossenen Stellung befindet.

10. Hahn nach Anspruch 8 oder 9, dadurch gekennzeichnet, daß die an der äußeren Seitenwand des Körpers angeordnete Einrichtung eine Vielzahl länglicher Rippen (493) enthält, die sich entlang der äußeren Seitenwand des Körpers erstrecken und die durch die äußere Dichtungshülse bedeckt sind.

**Revendications**

1. Robinet à tournant comprenant un boîtier (414; 514) qui possède des orifices d'entrée et de sortie (515) et une chambre tronconique dans laquelle débouchent lesdits orifices, une chemise tronconique qui est disposée de manière non rotative à l'intérieur de la chambre et qui prend un corps de chemise métallique rigide (472; 572) portant un moyen d'étanchéité en matière plastique (481, 486; 581, 586), de préférence un matériau du type carbone fluoré, sur ses faces radiales interne et externe, le matériau d'étanchéité étant constitué, sur sa face radiale intérieure par un manchon tronconique (486; 586)· en matière plastique; la chemise étant dotée d'ouvertures alignées avec lesdits orifices, un tournant tronconique (473) possédant un passage d'écoulement (526) intérieurement ménagé, ledit tournant étant reçu à l'intérieur de ladite chemise et pouvant être entraîné en rotation depuis l'extérieur de boîtier entre une position d'ouverture de robinet et une position de fermeture de robinet, ladite chemise et ledit tournant pouvant être aisément déplacés sous forme d'une simple unité (471) par rapport au boîtier (414; 514), caractérisé en ce que le matériau d'étanchéité se trouvant sur la face extérieure du corps métallique (472; 572) de ladite chemise est également constitué par un manchon (481; 581) en matière plastique, en ce que des bords (476, 482) sont prévus au niveau de l'extrémité de plus petit diamètre du corps de la chemise afin de retenir lesdits manchons sur ledit corps, et en ce que des lèvres annulaires de retenue (475) sont prévues autour des ouvertures alignées avec des orifices afin de maintenir le matériau des manchons écarté desdites ouvertures.

2. Robinet à tournant selon la revendication 1, caractérisé en ce que la matière plastique des manchons (481, 486; 581, 586) s'étend radialement vers l'intérieur et vers l'extérieur au-delà des lèvres et des bords (476, 482; 475) si bien que la paroi de la chambre intérieure et le tournant ne sont en contact que par la matière plastique des manchons de la chemise.

3. Robinet à tournant selon l'une ou l'autre des revendications précédentes, caractérisé en ce qu'une proportion notable de la surface radiale intérieure (474) du corps (472) est dégagée de manière à fournir des zones de dégagement entre la surface du tournant et le corps métallique pour permettre la dilatation thermique de la matière plastique du manchon interne pendant l'utilisation du robinet.

4. Robinet à tournant selon la revendication 1, 2 ou 3, caractérisé en ce qu'une partie de la surface radiale extérieure (480) du corps métallique (472) est ainsi conformée qu'elle fournit des zones de dégagement entre la surface de la chambre et le corps métallique pour permettre la dilatation thermique de la matière plastique du manchon extérieur pendant l'utilisation du robinet.

5. Robinet à tournant selon l'une quelconque des revendications précédentes, caractérisé en ce que les bords (476, 482) sont formés par un pourtour annulaire (482) fixé de manière démontable sur l'extrémité de plus petit diamètre du corps métallique (472).

6. Robinet à tournant selon l'une quelconque des revendications précédentes, caractérisé en ce que des moyens sont prévus qui maintiennent le corps (472) dans la chambre du boîtier de façon que le manchon extérieur soit comprimé entre eux.

7. Robinet à tournant selon l'une quelconque des revendications précédentes, caractérisé en ce que des moyens (561, 562) sont prévus pour maintenir le tournant dans le corps de manière que le manchon extérieur (586) soit comprimé entre eux.

8. Robinet à tournant selon l'une quelconque des revendications précédentes, caractérisé en ce que ledit corps (472) possède un moyen (485) disposé dans ledit trou et revêtu par ledit manchon d'étanchéité intérieur (486) afin de constituer des zones de retenue de pression pour ledit manchon d'étanchéité pour former un joint étanche contre ledit tournant rotatif et des zones de dégagement, ou libération, de pression pour ledit manchon d'étanchéité entre eux, et ledit corps possède un moyen (493) disposé sur sa paroi latérale externe et revêtu par ledit manchon d'étanchéité extérieur (486) afin de produire des zones de retenue de pression pour ledit manchon d'étanchéité pour former un joint étanche contre ledit boîtier et des zones de dégagement, ou libération de pression pour ledit manchon d'étanchéite entre eux.

9. Robinet selon la revendication 8, caractérisé en ce que le moyen disposé dans ledit trou du corps comporte plusieurs nervures longitudinales (485) s'étendant longitudinalement à l'intérieur dudit trou dudit corps de robinet et revêtues par ledit manchon d'étanchéité intérieur, lesdites nervures étant disposées de façon qu'au moins une extrémité du passage soit placée entre deux desdites nervures (485) lorsque ledit tournant se trouve dans sa position ouverte ou fermée.

10. Robinet selon la revendication 8 ou 9, caractérisé en ce que ledit moyen diposé sur la paroi latérale externe dudit corps comporte plusieurs nervures longitudinales (493) s'étendant le long de la paroi latérale externe dudit corps et revêtues par ledit manchon d'étanchéité extérieur.

Fig.1

Fig. 2

Fig. 3

Fig. 4.